Europäisches Patentamt

European Patent Office

Office européen des brevets

(11) Publication number: **0 031 972**
A2

# EUROPEAN PATENT APPLICATION

(21) Application number: **80201145.2**

(22) Date of filing: **03.12.80**

(51) Int. Cl.³: **G 02 B 5/16**
G 02 B 5/172, C 03 C 25/02

(30) Priority: **13.12.79 NL 7908966**

(43) Date of publication of application:
**15.07.81 Bulletin 81/28**

(84) Designated Contracting States:
**BE DE FR GB IT NL SE**

(71) Applicant: **N.V. Philips' Gloeilampenfabrieken**
**Pieter Zeemanstraat 6**
**NL-5621 CT Eindhoven(NL)**

(72) Inventor: **van der Hoek, Willem**
**c/o INT. OCTROOIBUREAU B.V. Prof. Holstlaan 6**
**NL-5656 AA Eindhoven(NL)**

(74) Representative: **Weening, Cornelis et al,**
**INTERNATIONAAL OCTROOIBUREAU B.V. Prof.**
**Holstlaan 6**
**NL-5656 AA Eindhoven(NL)**

(54) Optical telecommunication element, method of manufacturing same, and optical telecommunication cable comprising the element.

(57) An optical telecommunication element which is constructed from a central optical fibre which is under an axial pressure and which is incorporated in a close-fitting sheath of supporting fibres having a modulus of elasticity which is at least 4000 kg/mm² and is fixed within the sheath by a layer of cured lacquer.

FIG.2

EP 0 031 972 A2

"Optical telecommunication element, method of manufacturing same, and optical telecommunication cable comprising the element".

The invention relates to an optical telecommunication element which comprises a central optical fibre which is incorporated under axial pressure in a layer of a synthetic resin which is provided with reinforcement wires.

Such an element is known from German Offenlegungsschrift 2724155, page 6, second paragraph. According to the Offenlegungsschrift, a jacket of thermoplastic synthetic resin is provided around the optical fibre by means of an extrusion process. Upon cooling the extruded jacket shrinkage occurs so that the enclosed optical fibre comes under an axial pressure. The plastic synthetic resin must have a high modulus of elasticity so as to reduce lateral bending of the optical fibre under shrinkage of the synthetic resin. The axial compression of the optical fibre according to the Offenlegungsschrift can be increased by extruding a few prestressed wires together with the synthetic resin. It is also possible to provide the prestressed wires on the fibre already provided with an extruded jacket of synthetic resin.

It is the object of the present invention to provide an optical telecommunication element of the type mentioned in the opening paragraph which has such a construction that the optical fibre processed therein is enclosed under a high axial pressure and is protected from both internally and externally occurring forces. In this connection it is to be noted that the requirement is imposed that the optical telecommunication element, after having been processed to form a cable, can withstand large external forces occurring during or after laying the cables, for example, the bending force exerted on the cable when an operator laying the cable steps on the cable.

Furthermore, the optical fibre must be capable of being centred optimally in the telecommunication element.

Herewith it is achieved that the locally occurring eccentricity of the optical fibre relative to the pressure line in the element is minimised so that no detrimental bends with comparatively small radius of curvature of the optical fibre under axial pressure occur.

Another object of the invention is to provide an optical telecommunication element which can withstand more satisfactorily temperature variations and moisture and which can furthermore be manufactured in a continuous process in an attractive manner.

According to the invention these objects are achieved with an element of the kind mentioned in the opening paragraph which is characterized in that the optical fibre is incorporated in a close-fitting sheath of fibres having a minimum modulus of elasticity of $4000 \text{ kg/mm}^2$ and furthermore a cured layer of lacquer is present within the sheath and fixes the optical fibre axially within the sheath.

The sheath of fibres forms a harness or an armouring for the optical fibre the inside of which sheath either bears substantially against the optical fibre or is present at a small distance from the optical fibre. A distance of 10-500 /um may be present, in particular a distance of 20-200 /um.

The space between the optical fibre and the sheath as well as the space between the various sheath fibres is filled with the cured lacquer. As a result of this the position of the optical fibre within the sheath is fixed readily and permanently and furthermore the cohesion between the sheath fibres and hence the armouring of the optical fibre is intensified.

The cured lacquer has a network structure in which cross-links exist between the molecules. The lacquer is little sensitive to temperature and moisture. Furthermore in the element according to the invention only a small quantity of lacquer is used.

The element is manufactured by using a method which is characterized in that fibres which are under a tensile stress, said fibres having an elasticity modulus of at least 4000 kg/mm$^2$, are combined to form a sheath, an optical fibre is inserted centrally in the sheath, the space within the sheath is provided with a curable lacquer having a maximum viscosity of 50 cP, the lacquer is then cured and the tensile stress is finally removed, the central optical fibre coming under an axial compressive stress as a result of the associated shrinkage of the sheath fibres.

According to this process, the ultimate axial compression of the optical fibre is not produced by the lacquer but exclusively by the sheath fibres which are under a tensile stress.

The forces released upon removing the tensile stress are transmitted _via_ the thin cured layer of lacquer to the optical fibre which comes under axial pressure. The value of the axial fibre pressure is determined in particular by the value of the tensile stress exerted on the sheath fibres and the diameters of the optical fibre, the sheath fibres and the telecommunication element. With diameters remaining the same, the value of the axial pressure on the optical fibre can be adjusted by variation of the tensile stress. For example, an optical fibre having a diameter of 125 /um of a telecommunication element in accordance with the invention having a diameter of 800 /um can be set at an axial pressure of 15 N by exerting a pulling force of 400 N on the collective sheath fibres made of glass and each having a diameter of 100 /um. For example, if the sheath of the element has 40 fibres, this means an average pulling force of 10N of each sheath fibre. It is not necessary that the same pulling force is exerted on each sheath fibre. For example, a force of 12 N on the fibres situated more towards the outside of the sheath and 8 N on the sheath fibres situated more towards the interior can be exerted in the above example. The above-mentioned axial pressure force of 15 N on the optical fibres means a compression of the optical fibre in the order of magnitude of 2%.

In this connection reference is made to British Patent Specification 1486227 in which an optical telecommunication element is described which is manufactured by providing an optical fibre with a thermoplastic sheath by means of an extrusion process. Together with the synthetic resin, a few steel wires or polyamide fibres which are under a tensile stress are also passed through the extrusion head. By relaxing the wires on fibres a 1% shrinkage is obtained, which leads to an 1% excess of the optical fibre which is embedded helically in the synthetic resin sheath. The helical fibre which is not under stress has little resistance to external and internal forces.

In the element in accordance with the invention in which the optical fibre is incorporated in a close-fitting sheath of fibres while using a thin cured lacquer layer, there is no question of an essential increase in length or curvature of the optical fibre which, as already referred to, is under a high axial pressure.

In a favourable embodiment of the method in accordance with the invention the optical fibre, together with sheath fibres which are arranged regularly around the optical fibre and are under a tensile stress, are passed continuously through a reservoir having an inlet and an outlet, the reservoir containing a curable lacquer in which the sheath of fibres formed near or in the outlet together with the optical fibres centred in the sheath and the lacquer present in the sheath leave the reservoir _via_ the outlet the inside diameter of which corresponds to the outside diameter of the sheath, the lacquer is then cured and the tensile stress of the sheath fibres is removed.

Suitable sheath fibres having a modulus of elasticity which exceeds the above-mentioned minimum value of 4000 kg/mm$^2$ are _inter alia_ boron fibres, graphite fibres and glass fibres. Particularly suitable are the electrically non-conductive glass fibres having a modulus of elasticity of 7350 kg/mm$^2$. The diameter of the sheath fibres used is not restricted to narrow limits and is preferably 50-250 /um. Each sheath fibre may consist of a single wire or it may be composed of a bundle of elementary wires.

Also the optical fibre may be a single fibre or composed of a bundle of fibres.

In a further favourable embodiment of the process in accordance with the invention fibres are used which during the passage through the reservoir are arranged around the optical fibres in several funnel-like peels, the axes of the funnel-like peels coinciding and the peels having different apical angles.

The tensile stress used is preferably such that the fibres are elongated by 1-5%.

The lacquer process used in the method according to the invention is carried out with a thin liquid lacquer. Herewith it is achieved that the lacquer which is dragged along through the outlet of the reservoir by the optical fibre and sheath fibres exerts no or only small transverse forces on the optical fibre. Transverse forces are to be understood to mean herein forces which are at right angles to the longitudinal direction of the optical fibre. The centring of the optical fibre within the sheath is hence not adversely influenced. It is to be noted that in an extrusion process as used in the manufacture of the above-described known optical telecommunication elements, comparatively strong transverse forces occur which give rise to a variable non-centric position of the rather fragile optical fibre in the synthetic resin sheath. As a result of the shrinkage occurring upon cooling the sheath, when the pressure line does not coincide with the position of the optical fibre, a couple will act on the optical fibre which may lead to non-desired bends with comparatively small radii of curvature.

The lacquer used in the method in accordance with the invention after curing need not adhere to the optical fibre and/or the sheath fibres. It has been found that the friction between fibres and cured lacquers is sufficient to transmit the released tensile stress of the sheath fibres, on the optical fibre and to bring and to maintain the latter at an axial pressure.

The lacquer may be a thermo-curing lacquer, for example an epoxy lacquer which, if desired, can be brought at the desired degree of viscosity of..at most 50 cP by the addition of solvents.

The use of a thin-liquid lacquer (at most 50 cP) which does not comprise solvents and which can be cured with licht, in particular ultra-violet light, is to be preferred. These light-curing lacquers are commercially available. Suitable lacquers are those which comprise low molecular monomers on the basis of acrylic acid esters, as well as a photosensitive catalyst. A suitable catalyst is an aromatic carbonyl compound, in particular a benzoin derivative, such as benzoin isobutyl ether. The light-curable lacquer comprises more in particular a mixture of mono-, di-, tri- or tetra-esters of acrylic acid. Examples of readily useful esters of acrylic acid as well as the lacquers based hereon are stated _inter alia_ in Netherlands Patent Application 6611395 (PHN 8576) in the name of Applicants. Likewise readily useful lacquers are the commercially available polythiol-polythene lacquers which are described _inter alia_ in United States Patent Specifications 3,697,395 to 3,697,397 and 4,008,341.

The light-curable lacquer used in the method according to the invention can be cured by exposing the lacquer _via_ the sheath of fibres. In that case fibres must be used which are light-pervious, in particular glass fibres. The curing can be carried out at ambient temperature. The exposure time depends on the composition of the lacquer, in particular on the content of photosensitive catalyst which usually is approximately 0.5-4% by weight, and varies from a few seconds to a few minutes. In a most simple but quite interesting embodiment the sheath is composed of a single layer of sheath fibres such as f.e. a single layer of 6 sheath fibres which substantially bear against each other and have a diameter of for example 200 /um. The lacquer layer between the sheath and the central optical fibre with a diameter of 125 /um, has a thickness of 37,5 /um.

In a further favourable embodiment of the optical telecommunication element in accordance with the invention the sheath is constructed from concentric peels of sheath fibres, the space factor of the fibres in the sheath being at least 70% by volume.

Particularly favourable is a space factor of 80-88% by volume. With such a large space factor a large mechanical rigidity of the sheath is obtained, while furthermore the quantity of lacquer between the fibres of the sheath is minimum. This means that during the manufacture of the sheath the lacquer can rapidly be cured and only a short exposure time is necessary. Moreover, with a small quantity of lacquer the forces which are exerted on the fibres upon shrinkage or expansion of the lacquer are comparatively small.

In another favourable and more specific embodiment in which a strong telecommunication element is obtained, the sheath is constructed from at least two concentric peels in which each sheath fibre bears or substantially bears against the sheath fibres in the same peel situated on either side as well as against the adjoining sheath fibres in the preceding and/or subsequent peel.

This applies in particular to an element in which the sheath is constructed from a first (inner) peel of 6-8 fibres each having a diameter of 50-250 $\mu$m, a second peel of 12-15 fibres having a diameter of 50-250 $\mu$m and if desired a third peel of 18-22 fibres having a diameter of 50-250 $\mu$m.

As already noted hereinbefore the value of the axial pressure force on the optical fibre can be adjusted in a simple manner. An element suitable for practical application and capable of absorbing large external forces comprises an optical fibre which is under an axial pressure force of 5-70 N. Good results are obtained in particular with an element the optical fibre of which is under a pressure force of 10-50 N.

The invention also relates to an optical telecommunication cable which is characterized in that the cable comprises one or more of the telecommunication elements as well as an outer sheath of synthetic resin.

The optical telecommunication cable may be manufactured in a simple manner by taking up or enveloping one or several of the telecommunication elements in or with a sheath of synthetic resin. It is to be recommended to incorporate a strong armouring, for example a steel armouring, in the sheath of synthetic resin.

For example, a flat cable can be manufactured by enveloping one or several (for example 2 or 3) layers of parallel arranged telecommunication elements with synthetic resin. A steel wire may be incorporated in the sheath of synthetic resin on either side of the layer or layers of elements.

A round cable can be obtained by twisting a large number of optical telecommunication elements around a steel wire core and providing the assembly with an extruded sheath of synthetic resin. Instead of steel an armouring of twined fibres, for example glass fibres, may also be used.

The invention will now be described in greater detail with reference to the drawing in which

Fig. 1 is a cross-sectional view of a telecommunication element according to the invention,

Fig. 2 is a cross-sectional view of a device for manufacturing the element according to the invention and

Fig. 3 is a cross-sectional view of an optical telecommunication cable according to the invention.

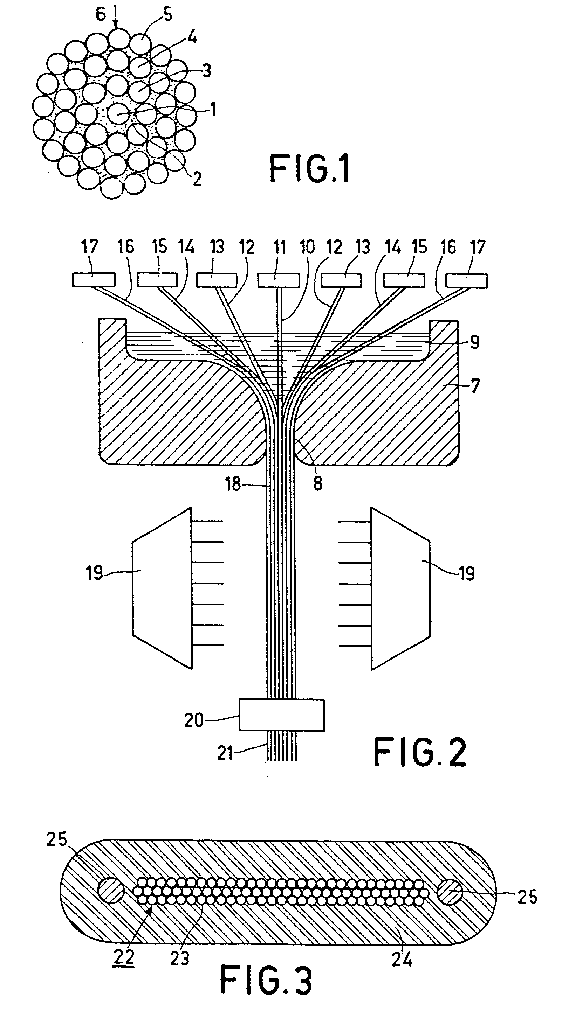

Reference numeral 1 in Fig. 1 denotes an optical fibre having a diameter of 125 $\mu$m. Optical fibre 1 is embedded in a layer 2 of a light-cured lacquer having a thickness of 50 $\mu$m. The lacquer layer 2 is surrounded by a first peel 3 of eight glass fibres each having a diameter of 100 $\mu$m. First peel 3 is surrounded by a second peel 4 of fourteen glass fibres having a diameter of likewise 100 $\mu$m, which in turn is surrounded by a third peel 5 of twenty glass fibres also having a diameter of 100 $\mu$m. The peels 3, 4 and 5 together constitute a sheath denoted by arrow 6. The space factor of the glass fibres in sheath 6 is 85% by volume. The remaining 15% by volume of the sheath are incorporated by cured lacquer present between the glass fibres.

Reference numeral 7 in Fig. 2 denotes a reservoir having a substantially conical outlet 8 the smallest diameter of which is approximately 800 $\mu$m. Reservoir 7 is filled with a low viscosity, light-curable lacquer 9 which has a viscosity of approximately 5 cP and has the following composition:

21.5 % by weight of ethylhexylacrylate

78.0 % by weight of butanedioldiacrylate

0.5 % by weight of benzyldimethylketal (initiator).

An optical fibre having a thickness of 125 $\mu$m is passed centrally through the reservoir 7. Optical fibre 10 is unwound freely from a non-braked supply reel 11. Reservoir 7 is furthermore traversed by a first bundle of eight glass fibres 12, each having a diameter of 100 $\mu$m. The bundle is funnel-shaped, the individual glass fibres 12 being distributed regularly over the surface of the funnel and opening into the outlet 8 of reservoir 7. The optical fibre 10 is passed along the axis of the funnel through reservoir 7. The glass fibres 12 are unwound from braked supply reels 13, the braking force on each reel being 10 N. A second bundle of fourteen fibres each having a diameter of 100 $\mu$m traverses the reservoir 7 from the surface of the lacquer 9 present in the reservoir down to the outlet 8. The bundle is also funnel-shaped, the axis of said second funnel coinciding with that of the first funnel and the apical angle of the second funnel being larger than that of the first. The fourteen glass fibres 14 are distributed regularly over the surface of the second funnel. Glass fibres 14 are unwound from braked supply reels 15, the braking force on the reels being approximately 11 N. A third likewise funnel-shaped bundle of 20 glass fibres 16 each having a diameter of 100 $\mu$m also traverses reservoir 7. Fibres 16 are unwound from braked supply reels 17. The braking force on reels 17 is 12 N. The fibres 16 are distributed regularly over the surface of the third funnel the axis of which coincides with that of the above mentioned first and second funnels and the apical angle of

0031972

which is larger than that of the second funnel.

The assembly of optical fibres 10 and glass fibres 12, 14, 16 leaves the reservoir 7 via the outlet 8, the glass fibres 12, 14, 16 constituting a sheath for the central optical fibre 10. The lacquer present between the fibres of the sheath as well as the lacquer present between the sheath and optical fibre 10 is also taken out of the reservoir 7.

The assembly 18 provided with lacquer is then exposed to ultraviolet light originating from light sources 19, the lacquer being cured. The resulting assembly is taken up by a winding head 20 with a pulling force of 460 N. After releasing the telecommunication element 21 the glass fibres 12, 14, 16 relax, the glass fibre 10 becoming an axial pressure of 17 N, this is 2% compression.

Reference numeral 22 in Fig. 3 denotes three layers of 29-30 parallel arranged optical telecommunication elements 23. The individual elements 23 are manufactured in the above-described manner with reference to Fig. 2. Around the layer 22 a sheath 24 of PVC has been moulded. Two steel wires 25 are incorporated in the synthetic resin sheath. The flat cable shown in Fig. 3 can withstand strong external forces. For example, the axial pressure on the optical fibre of elements 23 is exhausted at a cable radius of 60 mm

As such a cable radius is very small, a cable according to the invention can withstand strong external forces, which means, for example, that operators who lay the cable may jump on the cable or that bulldozers may drive over the cable without damage occurring to the optical fibre.

0031972

CLAIMS:

1. An optical telecommunication element comprising a central optical fibre which is incorporated under an axial pressure in a layer of synthetic resin which is provided with reinforcement wires, characterized in that the optical fibre is incorporated in a close-fitting sheath of fibres, having a minimum elasticity modulus of 4000 kg/mm$^2$ and furthermore a cured layer of lacquer is present within the sheath and fixes the optical fibre axially and radially within the sheath.

2. An optical telecommunication element as claimed in Claim 1, characterized in that a layer of light-cured lacquer is present in the sheath.

3. An optical telecommunication element as claimed in Claim 1 or 2, characterized in that the sheath is constructed from concentric peels of sheath fibres, the space factor of the fibres in the sheath being at least 70% by volume.

4. An optical telecommunication element as claimed in Claim 3, characterized in that the space factor is 80-88% by volume.

5. An optical telecommunication element as claimed in Claim 3 or 4, characterized in that the sheath is constructed from at least two concentric peels in which each sheath fibre bears or substantially bears against the sheath fibres in the same peel situated on either side as well as against the adjoining sheath fibres in the preceding and/or subsequent peel.

6. An optical telecommunication element as claimed in Claim 5, characterized in that the sheath is constructed from a first peel of 6-8 fibres each having a diameter of 50-250 /um, a second peel of 12-15 fibres having a diameter of 50-250 /um, and if desired a third peel of 18-22 fibres having a diameter of 50-250 /um.

7.       An optical telecommunication element as claimed in any of the preceding Claims, characterized in that the axial pressure force on the optical fibre is 5-70N.

8.       A method of manufacturing an optical telecommunication element as claimed in Claim 1, characterized in that sheath fibres which are under a tensile stress are formed into a sheath, an optical fibre is inserted centrally into the sheath, the space within the sheath is provided with a curable lacquer having a maximum viscosity of 50 cP, the lacquer is then cured and finally the tensile stress is removed, so that as a result of the associated shrinkage of the sheath fibres, the central optical fibre comes under an axial compression stress.

9.       A method as claimed in Claim 8, characterized in that the optical fibres together with sheath fibres which are arranged regularly around the optical fibre and which are under a tensile stress are passed continuously through a reservoir having an inlet and an outlet and containing a curable lacquer in which the sheath of fibres formed in or near the outlet together with the optical fibre centred in the sheath and the lacquer present in the sheath leave the reservoir _via_ the outlet the inside diameter of which corresponds to the outside diameter of the sheath, the lacquer is then cured and the tensile stress of the sheath fibres is then removed.

10.       A method as claimed in Claim 8 or 9, characterized in that sheath fibres are used which during the passage through the reservoir are arranged in several funnel-like peels around the optical fibre, the axes of the funnel-shaped peels coinciding and the peels having different apical angles.

11.       An optical telecommunication cable, characterized in that the cable comprises one or several of the optical telecommunication elements as claimed in Claim 1, as well as an outer sheath of synthetic resin.

FIG.1

FIG.2

FIG.3

PHN 9649